# EUROPEAN PATENT APPLICATION

(11) **EP 4 279 542 A1**
(43) Date of publication of application: **22.11.2023**
(21) Application number: 21919644.1
(22) Date of filing: 13.12.2021
(51) Int. Cl.: C08K 5/5419, C08L 83/04, C08K 3/013

(54) **HEAT-CONDUCTIVE SILICONE COMPOSITION**

(30) Priority: 13.01.2021 JP 2021003759
(71) Applicant: SHIN-ETSU CHEMICAL CO., LTD., Tokyo 1000005 (JP)
(72) Inventor: TSUJI Kenichi, Annaka-shi, Gunma 379-0224 (JP); YAMADA Kunihiro, Annaka-shi, Gunma 379-0224 (JP); AKIBA Shota, Annaka-shi, Gunma 379-0224 (JP)
(74) Representative: Sonnenhauser, Thomas Martin
(86) International application number: PCT/JP2021/045768
(87) International publication number: WO 2022/153755

(57) **Abstract**

The present invention is a thermally conductive silicone composition including: (A) an organopolysiloxane represented by the following general formula (1) having a kinematic viscosity at 25°C of 10 to 10,000 mm²/s, (B) an organopolysiloxane other than the component (A), represented by the following general formula (2) and having a kinematic viscosity at 25°C of 1,000 to 100,000 mm²/s, (C) an organosilane represented by the following general formula (3), and (D) a thermally conductive filler having a thermal conductivity of 10 W/m·°C or more. By the above composition, a thermally conductive silicone composition which does not cause a thickening phenomenon during preservation and has excellent shift resistance is provided.

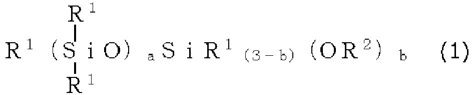

R³_{c}SiO_{(4-c)/2} (2)

R⁴_{d}R⁵ₑSi(OR⁶)_{4-d-e} (3)

## Description

### TECHNICAL FIELD

The present invention relates to a thermally conductive silicone composition.

### BACKGROUND ART

Due to increased heat generation and high-density packaging of electric components, a need for member cooling has been more and more increasing. A general method for the member cooling is transferring heat from a heat generation member to a cooling member. In such a configuration, a thermally conductive member is used to enhance adhesion between a heat generation part and a cooling part for increasing efficiency of thermal conduction. Examples of the thermally conductive member include a sheet-shaped molded product, a greasy product which is not a molded product, or the like (Patent Documents 1 and 2).

From the viewpoint of automatic packaging, a greasy material is often used. However, since the greasy product is in a liquid state, when an element undergoes repeated cycles of heat generation and cooling, the material may flow out. If such a phenomenon occurs, the contact between the heat generation part and the cooling part becomes poor, the heat transfer performance deteriorates, and thus the performance of the element is degraded. In such a case, a grease which is in a liquid state at the time of application and cured after the application, or the like is also used (Patent Documents 3 and 4).

However, these products have high reactivity, so that freezing or refrigeration preservation is required for suppressing reaction, or sealed preservation is required for shielding moisture. These preservation limits material storage before use, and therefore a material which can be preserved under normal temperature and usual conditions is demanded from the viewpoint of handleability.

Patent Document 5 discloses that a combination use of an organopolysiloxane and alkoxysilane having specific structures can provide a composition having superior fluidity, and durability and reliability under high temperature and high humidity conditions. However, there is no description concerning shift resistance in Patent Document 5. Moreover, when the composition disclosed in this document is stored at room temperature, a grease is thickened during the storage.

### CITATION LIST

### PATENT LITERATURE

Patent Document 1: JP 2015-233104 A
Patent Document 2: JP 2018-188559 A
Patent Document 3: JP 2016-017159 A
Patent Document 4: JP 5733087 B
Patent Document 5: JP 4933094 B

### SUMMARY OF INVENTION

### TECHNICAL PROBLEM

The present invention was made in view of the above-mentioned circumstances, and has for its object to provide a thermally conductive silicone composition which does not cause a thickening phenomenon during preservation, and has excellent shift resistance.

### SOLUTION TO PROBLEM

For solving the above problem, the present invention provides a thermally conductive silicone composition blended with an organopolysiloxane having a specific viscosity for allowing storage at normal temperature and improving the shift resistance. The means for solving is described in detail below.

That is, the present invention provides a thermally conductive silicone composition comprising:
(A) 100 parts by mass of an organopolysiloxane represented by the following general formula (1) having a kinematic viscosity at 25°C of 10 to 10,000 mm²/s, 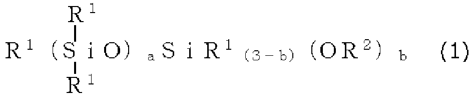 wherein R¹ independently represents an unsubstituted or substituted monovalent hydrocarbon group, R² independently represents an alkyl group, an alkoxyalkyl group, an alkenyl group, or an acyl group, "a" represents an integer of 5 to 100, and "b" represents an integer of 1 to 3;
(B) 40 to 250 parts by mass of an organopolysiloxane other than the component (A), represented by the following general formula (2) and having a kinematic viscosity at 25°C of 1,000 to 100,000 mm²/s,

   R³_{c}SiO_{(4-c)/2} (2)

   wherein R³ represents one or two or more groups selected from the group of saturated or unsaturated monovalent hydrocarbon groups having 1 to 18 carbon atoms, and "c" represents a positive number of 1.8≤c≤2.2;
(C) 1 to 50 parts by mass, based on 100 parts by mass of the total of the components (A) and (B), of an organosilane represented by the following general formula (3),

   R⁴_{d}R⁵ₑSi(OR⁶)_{4-d-e} (3)

   wherein R⁴ independently represents an alkyl group having 9 to 15 carbon atoms, R⁵ independently represents an unsubstituted or substituted monovalent hydrocarbon group having 1 to 8 carbon atoms, R⁶ independently represents an alkyl group having 1 to 6 carbon atoms, "d" represents an integer of 1 to 3, and "e" represents an integer of 0 to 2, provided that d+e is an integer of 1 to 3; and
(D) 500 to 3,000 parts by mass, based on 100 parts by mass of the total of the components (A), (B), and (C), of a thermally conductive filler having a thermal conductivity of 10 W/m·°C or more.

Such a thermally conductive silicone composition does not cause the thickening phenomenon during preservation and has excellent shift resistance.

Moreover, in the present invention, the thermally conductive silicone composition preferably has an absolute viscosity at 25°C of 100 to 800 Pa·s.

Such a thermally conductive silicone composition does not solidify during preservation at room temperature.

Furthermore, in the present invention, the thermally conductive silicone composition preferably has a thermal conductivity of 4.0 W/m·°C or more.

Such a thermally conductive silicone composition has excellent thermal conductivity.

### ADVANTAGEOUS EFFECTS OF INVENTION

As described above, the thermally conductive silicone composition of the present invention can prevent solidification during preservation at room temperature while maintaining high thermal conductivity and shift resistance as compared with prior art.

### DESCRIPTION OF EMBODIMENTS

As described above, it has been demanded to develop a thermally conductive silicone composition which does not cause the thickening phenomenon during preservation and has excellent shift resistance.

The present inventors have made intensive investigations to solve the above problems, and as a result, found that it is possible to prevent solidification during preservation at room temperature without freezing or refrigeration preservation while maintaining high thermal conductivity and shift resistance as compared with prior art by blending an organosilane in a specific range and further blending an organopolysiloxane with a specific viscosity in a specific range. Thereby, the present invention was completed.

That is, the present invention is a thermally conductive silicone composition comprising:
(A) 100 parts by mass of an organopolysiloxane represented by the following general formula (1) having a kinematic viscosity at 25°C of 10 to 10,000 mm²/s, 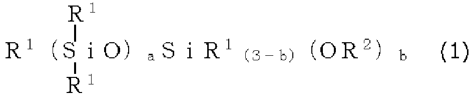 wherein R¹ independently represents an unsubstituted or substituted monovalent hydrocarbon group, R² independently represents an alkyl group, an alkoxyalkyl group, an alkenyl group, or an acyl group, "a" represents an integer of 5 to 100, and "b" represents an integer of 1 to 3;
(B) 40 to 250 parts by mass of an organopolysiloxane other than the component (A), represented by the following general formula (2) and having a kinematic viscosity at 25°C of 1,000 to 100,000 mm²/s,

   R³_{c}SiO_{(4-c)/2} (2)

   wherein R³ represents one or two or more groups selected from the group of saturated or unsaturated monovalent hydrocarbon groups having 1 to 18 carbon atoms, and "c" represents a positive number of 1.8≤c≤2.2;
(C) 1 to 50 parts by mass, based on 100 parts by mass of the total of the components (A) and (B), of an organosilane represented by the following general formula (3),

   R⁴_{d}R⁵ₑSi(OR⁶)_{4-d-e} (3)

   wherein R⁴ independently represents an alkyl group having 9 to 15 carbon atoms, R⁵ independently represents an unsubstituted or substituted monovalent hydrocarbon group having 1 to 8 carbon atoms, R⁶ independently represents an alkyl group having 1 to 6 carbon atoms, "d" represents an integer of 1 to 3, and "e" represents an integer of 0 to 2, provided that d+e is an integer of 1 to 3; and
(D) 500 to 3,000 parts by mass, based on 100 parts by mass of the total of the components (A), (B), and (C), of a thermally conductive filler having a thermal conductivity of 10 W/m·°C or more.

Hereinafter, the present invention will be described in detail. However, the present invention is not limited thereto.

### Component (A)

The organopolysiloxane in the component (A) is an organopolysiloxane represented by the general formula (1) having a kinematic viscosity at 25°C of 10 to 10,000 mm²/s, 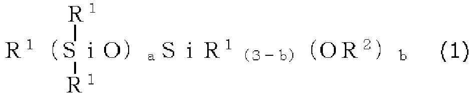 wherein R¹ independently represents an unsubstituted or substituted monovalent hydrocarbon group, R² independently represents an alkyl group, an alkoxyalkyl group, an alkenyl group, or an acyl group, "a" represents an integer of 5 to 100, and "b" represents an integer of 1 to 3.

The component (A) may be used singly, or two or more of them may be used in combination.

The above R¹ independently represents an unsubstituted or substituted monovalent hydrocarbon group. Examples thereof include a linear alkyl group, a branched alkyl group, a cyclic alkyl group, an alkenyl group, an aryl group, an aralkyl group, and a halogenated alkyl group. Examples of the linear alkyl group include a methyl group, an ethyl group, a propyl group, a hexyl group, and an octyl group. Examples of the branched alkyl group include an isopropyl group, an isobutyl group, a tert-butyl group, and a 2-ethylhexyl group. Examples of the cyclic alkyl group include a cyclopentyl group and a cyclohexyl group. Examples of the alkenyl group include a vinyl group and an allyl group. Examples of the aryl group include a phenyl group and a tolyl group. Examples of the aralkyl group include a 2-phenylethyl group and a 2-methyl-2-phenylethyl group. Examples of the halogenated alkyl group include a 3,3,3-trifluoropropyl group, a 2-(nonafluorobutyl)ethyl group, and a 2-(heptadecafluorooctyl)ethyl group. R¹ is preferably a methyl group or a phenyl group.

The above R² independently represents an alkyl group, an alkoxyalkyl group, an alkenyl group, or an acyl group. Examples of the alkyl group include a linear alkyl group, a branched alkyl group, and a cyclic alkyl group, same as those exemplified for R¹. Examples of the alkoxyalkyl group include a methoxyethyl group and a methoxypropyl group. Examples of the alkenyl group include a vinyl group and an allyl group. Examples of the acyl group include an acetyl group and an octanoyl group. R² is preferably an alkyl group, and particularly preferably a methyl group or an ethyl group. "a" represents an integer of 5 to 100. "b" represents an integer of 1 to 3, preferably 3.

The kinematic viscosity of the component (A) at 25°C as measured by an Ostwald viscometer is generally 10 to 10,000 mm²/s, and particularly preferably 10 to 5,000 mm²/s. When the kinematic viscosity is less than 10 mm²/s, oil-bleeding from the composition easily occurs, and when the kinematic viscosity is higher than 10,000 mm²/s, the fluidity of the composition becomes poor.

Preferred specific examples of the component (A) include the following.

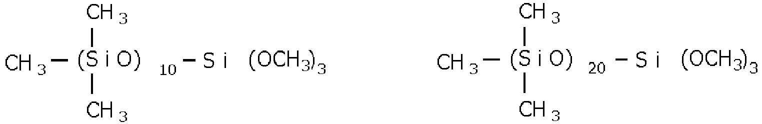

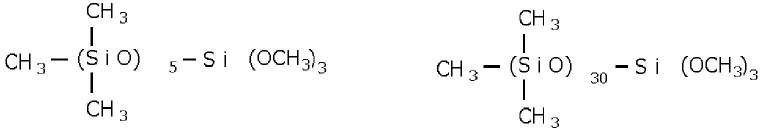

### Component (B)

The component (B) is an organopolysiloxane other than the component (A), represented by the following general formula (2) and having a kinematic viscosity at 25°C of 1,000 to 100,000 mm²/s,

R³_{c}SiO_{(4-c)/2} (2)

wherein R³ represents one or two or more groups selected from the group of saturated or unsaturated monovalent hydrocarbon groups having 1 to 18 carbon atoms, and "c" represents a positive number of 1.8≤c≤2.2.

Provided that, R³ in the above formula (2) is at least one group selected from the group of saturated or unsaturated monovalent hydrocarbon groups having 1 to 18 carbon atoms. "c" needs to be a positive number of 1.8 to 2.2, and particularly preferably a positive number of 1.9 to 2.1, from the viewpoint of required viscosity. Examples of the R³ include alkyl groups such as a methyl group, an ethyl group, a propyl group, a hexyl group, an octyl group, a decyl group, a dodecyl group, a tetradecyl group, a hexadecyl group, and an octadecyl group; cycloalkyl groups such as a cyclopentyl group and a cyclohexyl group; alkenyl groups such as a vinyl group and an allyl group; aryl groups such as a phenyl group and a tolyl group; aralkyl groups such as a 2-phenylethyl group and a 2-methyl-2-phenylethyl group; halogenated hydrocarbon groups such as a 3,3,3-trifluoropropyl group, a 2-(perfluorobutyl)ethyl group, and a 2-(perfluorooctyl)ethyl group, and a p-chlorophenyl group.

In addition, the kinematic viscosity of the organopolysiloxane at 25°C as measured by an Ostwald viscometer needs to be in the range of 1,000 to 100,000 mm²/s, and preferably in the range of 1,000 to 50,000 mm²/s. This is because when the kinematic viscosity of the organopolysiloxane is less than 1,000 mm²/s, thickening during preservation easily occurs when the composition is produced, and when it is higher than 100,000 mm²/s, the extensibility becomes poor and workability is deteriorated when the composition is produced.

When the blending amount of the component (B) is less than 40 parts by mass, the composition solidifies during preservation at room temperature, and when it is more than 250 parts by mass, the extensibility of the composition becomes poor. Therefore, the blending amount of the component (B) needs to be in the range of 40 to 250 parts by mass, and preferably 40 to 230 parts by mass.

### Component (C)

The component (C) is an organosilane represented by the following general formula (3),

R⁴_{d}R⁵ₑSi(OR⁶)_{4-d-e} (3)

wherein R⁴ independently represents an alkyl group having 9 to 15 carbon atoms, R⁵ independently represents an unsubstituted or substituted monovalent hydrocarbon group having 1 to 8 carbon atoms, R⁶ independently represents an alkyl group having 1 to 6 carbon atoms, "d" represents an integer of 1 to 3, and "e" represents an integer of 0 to 2, provided that d+e is an integer of 1 to 3.

Specific examples of R⁴ in the above general formula (3) include a nonyl group, a decyl group, a dodecyl group, and a tetradecyl group. If the carbon number is less than 9, the wettability with a filler is not sufficient. If the carbon number is more than 15, the organosilane solidifies at normal temperature, so that handling is inconvenient and also low-temperature characteristics of the obtained composition is deteriorated. Further, "d" is 1, 2, or 3, and particularly preferably 1.

Further, specific examples of R⁵ in the above formula (3) are saturated or unsaturated monovalent hydrocarbon groups having 1 to 8 carbon atoms, and such groups includes an alkyl group, a cycloalkyl group, an alkenyl group, an aryl group, an aralkyl group, and a halogenated hydrocarbon group. Examples thereof include alkyl groups such as a methyl group, an ethyl group, a propyl group, a hexyl group, and an octyl group; cycloalkyl groups such as a cyclopentyl group and a cyclohexyl group; alkenyl groups such as a vinyl group and an allyl group; aryl groups such as a phenyl group and a tolyl group; aralkyl groups such as a 2-phenylethyl group and a 2-methyl-2-phenylethyl group; and halogenated hydrocarbon groups such as a 3,3,3-trifluoropropyl group, a 2-(perfluorobutyl)ethyl group, a 2-(perfluorooctyl)ethyl group, and a p-chlorophenyl group. Particularly preferred is a methyl group or an ethyl group. Further, "e" represents an integer of 0 to 2. Provided that, d+e is an integer of 1 to 3, particularly preferably 1.

R⁶ in the above formula (3) is one or two or more alkyl groups having 1 to 6 carbon atoms such as a methyl group, an ethyl group, a propyl group, a butyl group, a pentyl group, and a hexyl group. Particularly preferred is a methyl group or an ethyl group.

Specific examples of the organosilane represented by the above general formula (3) include the following.

C₁₀H₂₁Si(OCH₃)₃, C₁₂H₂₅Si(OCH₃)₃, C₁₂H₂₅Si(OC₂H₅)₃, C₁₀H₂₁Si(CH₃)(OCH₃)₂, C₁₀H₂₁Si(C₆H₅)(OCH₃)₂, C₁₀H₂₁Si(CH₃)(OC₂H₅)₂, C₁₀H₂₁Si(CH=CH₂)(OCH₃)₂, and C₁₀H₂₁Si(CH₂CH₂CF₃)(OCH₃)₂.

When the amount of the organosilane is less than 1 part by mass based on 100 parts by mass of the total of the component (A) and the component (B), composition shift occurs, and when it is more than 50 parts by mass, the composition solidifies during preservation at room temperature. Therefore, the amount of the organosilane needs to be in the range of 1 to 50 parts by mass, preferably 1 to 30 parts by mass, and more preferably 2 to 30 parts by mass.

### Component (D)

As the component (D), which is the thermally conductive filler having a thermal conductivity, a material having the thermal conductivity of 10 W/m·°C or more is used. This is because when the thermal conductivity of the filler is less than 10 W/m·°C, the thermal conductivity of the thermally conductive silicone composition itself is small. The higher the thermal conductivity of the filler, the more preferable. The upper limit of the thermal conductivity is not particularly defined, but may be 5000 W/m·°C or less, for example.

Examples of the above thermally conductive filler include aluminum powders, copper powders, silver powders, iron powders, nickel powders, gold powders, tin powders, metal silicon powders, aluminum nitride powders, boron nitride powders, silicon nitride powders, alumina powders, diamond powders, carbon powders, indium powders, gallium powders, and zinc oxide powders. Any fillers having the thermal conductivity of 10 W/m·°C or more are usable, and only one kind of filler may be used, or two or more kinds of fillers may be mixed.

The average particle size of the component (D) is preferably in the range of 0.1 to 150 um. This is because if the average particle size is larger than 0.1 um, the obtained composition becomes greasy to have excellent extensibility, and if it is less than 150 µm, the thermal resistance of heat dissipating grease is small and the performance is improved.

Note that, in the present invention, the average particle size is a volume mean diameter on a volume basis, which can be measured by Microtrac MT3300EX manufactured by Nikkiso Co., Ltd. The shape of the component (D) may be any shape such as amorphous or spherical.

When the filling amount of the component (D) is less than 500 parts by mass based on 100 parts by mass of the total of the components (A), (B), and (C), the thermal conductivity of the composition is reduced, and if it is more than 3,000 parts by mass, the viscosity of the composition increases, and the extensibility becomes poor. Thus, the filling amount of the component (D) needs to be in the range of 500 to 3,000 parts by mass, preferably 800 to 2,800 parts by mass, and more preferably in the range of 800 to 2,500 parts by mass.

### Other Components

Furthermore, in the present invention, an antioxidant, a heat resistance improver, a colorant or the like, other than the above components (A) to (D) may be added as necessary according to the purpose of the present invention.

The thermally conductive silicone composition of the present invention preferably has the absolute viscosity at 25°C of 100 to 800 Pa·s. Within such a viscosity range, the composition has suitable fluidity and good workability without being solidified during preservation, and thus is preferable.

The absolute viscosity at 25°C is measured by, for example, a rotary viscometer.

Furthermore, the thermally conductive silicone composition of the present invention preferably has the thermal conductivity of 4.0 W/m·°C or more. If the thermal conductivity is 4.0 W/m·°C or more, the composition has excellent thermal conductivity, and thus is preferable. The higher the thermal conductivity of the thermally conductive silicone composition of the present invention, the more preferable. The upper limit thereof is not particularly defined, but may be 100 W/m·°C or less, for example.

The thermal conductivity is measured by, for example, a rapid thermal conductivity meter at 25°C.

As described above, by the thermally conductive silicone composition of the present invention, a thermally conductive silicone composition which does not cause the thickening phenomenon during preservation and has excellent shift resistance can be obtained by optimizing the number of parts of organosilane to be blended and blending an organopolysiloxane having a specific viscosity in a specific amount.

### Method for Producing Thermally Conductive Silicone Composition

To produce the thermally conductive silicone composition (grease) of the present invention, for example, the components (A) to (D) may be mixed with a mixer such as Trimix, Twin Mixer, Planetary Mixer (all registered trademarks, mixers manufactured by INOUE MFG., INC.), Ultra Mixer (registered trademark, a mixer manufactured by MIZUHO INDUSTRIAL CO., LTD.), and Hivis Disper Mix (registered trademark, a mixer manufactured by Tokushu Kika Kogyo Co., Ltd.).

### EXAMPLE

Hereinafter, the present invention will be specifically described with reference to Examples and Comparative Examples. However, the present invention is not limited thereto.

Testing of the inventive effects was conducted as follows.

### Viscosity Measurement

The thermally conductive silicone composition was left to stand for 24 hours in an incubation room at 25°C, and then the absolute viscosity was measured using a Malcom Viscometer at a rotation number of 10 rpm.

### Method for Measuring Thermal Conductivity

The thermal conductivity of the thermally conductive silicone composition was measured by a rapid thermal conductivity meter QTM-500 (KYOTO ELECTRONICS MANUFACTURING CO., LTD.) at 25°C.

### Evaluation of Preservation Property at Room Temperature

Samples were stored in an incubation bath at 25°C /50%, and the absolute viscosity was measured after 3 months by the above measuring method. The samples with the viscosity exceeding 800 Pa·s were determined as solidified.

### Shift Resistance

The thermally conductive silicone composition was sandwiched between a glass plate and an aluminum plate in a thickness of 100 µm, and left to stand vertically in a heat cycle testing machine between 0°C and 100°C. Then, testing was performed for 500 cycles. Distance shifted from the initial position was measured.

The following components for forming the thermally conductive silicone composition were provided.

### Component (A)

A-1: Organopolysiloxane represented by the following formula (4) having a kinematic viscosity of 30 mm²/s

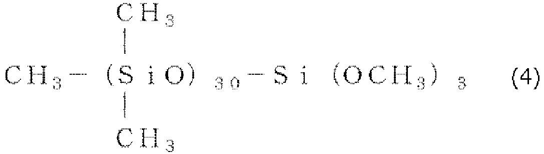

### Component (B)

B-1: Organopolysiloxane composed of ((CH₃)₃SiO_{1/2}) units and ((CH₃)₂SiO) units, having a kinematic viscosity of 1,000 mm²/s
B-2: Organopolysiloxane composed of ((CH₃)₃SiO_{1/2}) units and ((CH₃)₂SiO) units, having a kinematic viscosity of 2,000 mm²/s
B-3: Organopolysiloxane composed of ((CH₃)₃SiO_{1/2}) units and ((CH₃)₂SiO) units, having a kinematic viscosity of 10,000 mm²/s
B-4 (Comparative Example): Organopolysiloxane composed of ((CH₃)₃SiO_{1/2}) units and ((CH₃)₂SiO) units, having a kinematic viscosity of 100 mm²/s.
B-5 (Comparative Example): Organopolysiloxane composed of ((CH₃)₃SiO_{1/2}) units and ((CH₃)₂SiO) units, having a kinematic viscosity of 200,000 mm²/s.

Note that the above B-1 to B-3 satisfy conditions of the general formula (2).

### Component (C)

C-1: C₁₀H₂₁Si(OCH₃)₃

### Component (D)

D-1: A thermally conductive filler D-1 was obtained by mixing the following aluminum powders and zinc oxide powders using 5L Planetary Mixer (manufactured by INOUE MFG., INC.) at room temperature in the mixing ratio shown in the following Table 1 for 15 minutes.
·Aluminum powders having the average particle size of 7um (thermal conductivity: 236 W/m·°C)
·Zinc oxide powder having the average particle size of 0.6 µm (thermal conductivity: 25 W/m·°C)

**[Table 1]**

| Component (D) | Aluminum powders having average particle size of 7 µm | Zinc oxide powders having average particle size of 0.6 µm |
|---|---|---|
| D-1 | 1600 | 400 |

The components (A) to (D) were mixed as shown below to obtain thermally conductive silicone compositions of Examples 1 to 8 and Comparative Examples 1 to 8. That is, the component (A) was placed in 5L Planetary Mixer (manufactured by INOUE MFG., INC.), the components (B), (C), and (D) were added thereto in the blending amounts shown in Tables 2 and 3, and mixed for 1 hour at 70°C.

The evaluation results are shown in Tables 2 and 3.

**[Table 2]**

| Unit: part by mass | Examples | | | | | | | |
|---|---|---|---|---|---|---|---|---|
| | 1 | 2 | 3 | 4 | 5 | 6 | 7 | 8 |
| A-1 | 100 | 100 | 100 | 100 | 100 | 100 | 100 | 100 |
| B-1 | 50 | | | 40 | 200 | | 30 | 250 |
| B-2 | | 47 | | | | | | |
| B-3 | | | 40 | | | 60 | 30 | |
| B-4 (Comp. Ex.) | | | | | | | | |
| B-5 (Comp. Ex.) | | | | | | | | |
| C-1 | 15 | 13 | 20 | 3 | 25 | 20 | 10 | 50 |
| Component (C)/ 100 parts of the total of components (A) and (B) | 10 | 8.5 | 14.3 | 2.1 | 8.3 | 12.5 | 6.3 | 14.3 |
| D-1 | 1938 | 2000 | 1938 | 1610 | 3821 | 1776 | 1958 | 4197 |
| Component (D)/ 100 parts of the total of components (A), (B) and (C) | 1174 | 1253 | 1211 | 1134 | 1176 | 987 | 1152 | 1049 |
| Viscosity (Pa·s) | 151 | 283 | 292 | 337 | 250 | 311 | 263 | 341 |
| Thermal conductivity (W/m·°C) | 5.5 | 6.0 | 5.8 | 5.1 | 5.6 | 4.3 | 5.2 | 4.7 |
| Shift resistance (mm) | 1.0 | 0.5 | 0.5 | 1.5 | 1.0 | 1.0 | 1.5 | 1.0 |
| Viscosity after preservation at room temperature (Pa·s) | 209 | 374 | 442 | 383 | 496 | 395 | 421 | 479 |

**[Table 3]**

| Unit: part by mass | Comparative Examples | | | | | | | |
|---|---|---|---|---|---|---|---|---|
| | 1 | 2 | 3 | 4 | 5 | 6 | 7 | 8 |
| A-1 | 100 | 100 | 100 | 100 | 100 | 100 | 100 | 100 |
| B-1 | | | | 260 | | | | 50 |
| B-2 | | | | | | | 200 | |
| B-3 | | | 30 | | 150 | 40 | | |
| B-4 (Comp. Ex.) | 200 | | | | | | | |
| B-5 (Comp. Ex.) | | 40 | | | | | | |
| C-1 | 8 | 30 | 15 | 30 | 130 | 20 | 25 | 1.3 |
| Component (C)/ 100 parts of the total of components (A) and (B) | 2.7 | 21.4 | 11.5 | 8.3 | 52 | 14.3 | 8.3 | 0.8 |
| D-1 | 3821 | 2000 | 1661 | 4176 | 4012 | 4807 | 1556 | 1835 |
| Component (D)/ 100 parts of the total of components (A), (B) and (C) | 1241 | 1176 | 1145 | 1071 | 1056 | 3005 | 479 | 1213 |
| Viscosity (Pa·s) | 201 | Not become greasy | 203 | Not become greasy | 154 | Not become greasy | 83 | 282 |
| Thermal conductivity (W/m·°C) | 6.0 | | 5.4 | | 4.7 | | 2.1 | 5.9 |
| Shift resistance (mm) | 1.0 | | 1.0 | | 0.5 | | 2.0 | 5.0 |
| Viscosity after preservation at room temperature (Pa·s) | 862 | | 827 | | 859 | | 422 | 411 |

As shown in Table 2, the thermally conductive silicone compositions produced in Examples 1 to 8 have the viscosity after preservation at room temperature of 100 to 800 Pa·s, and high thermal conductivity of 4.0 W/m·°C or more.

Meanwhile, as shown in Table 3, when the kinematic viscosity of the component (B) is low as in Comparative Example 1, the composition solidifies. When the kinematic viscosity of the component (B) is high as in Comparative Example 2, the composition does not become greasy. When the content of the component (B) is too small as in Comparative Example 3, the composition solidifies. When the content of the component (B) is too large as in Comparative Example 4, the composition does not become greasy. When the content of the component (C) is too large as in Comparative Example 5, the composition solidifies. When the content of the component (D) is too large as in Comparative Example 6, the composition does not become greasy. When the content of the component (D) is too small as in Comparative Example 7, the thermal conductivity is reduced. When the content of the component (C) is too small as in Comparative Example 8, the shift resistance deteriorates.

As described above, when the content of the component (B) is less than 40 parts by mass, the composition solidifies (Comparative Example 3), and when the content of the component (B) is more than 250 parts by mass, the composition does not become greasy (Comparative Example 4). Thus, when the component (B) of the thermally conductive silicone composition of the present invention is within the range of 40 to 250 parts by mass, the thermally conductive silicone composition which does not cause the thickening during preservation at room temperature and has preferable shift resistance can be obtained. In the present invention, by adjusting the kinematic viscosity and blending amount of the organopolysiloxane to be blended, and blending amount of the organosilane and the thermally conductive filler in a skilled manner, the thermally conductive silicone composition having such excellent physical properties can be obtained.

It should be noted that the present invention is not limited to the above-described embodiments. The embodiments are just examples, and any examples that substantially have the same configuration and demonstrate the same functions and effects as those in the technical concept disclosed in claims of the present invention are included in the technical scope of the present invention.

## Claims

1. A thermally conductive silicone composition comprising:
(A) 100 parts by mass of an organopolysiloxane represented by the following general formula (1) having a kinematic viscosity at 25°C of 10 to 10,000 mm²/s, 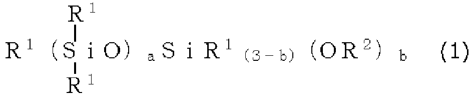 wherein R¹ independently represents an unsubstituted or substituted monovalent hydrocarbon group, R² independently represents an alkyl group, an alkoxyalkyl group, an alkenyl group, or an acyl group, "a" represents an integer of 5 to 100, and "b" represents an integer of 1 to 3;
(B) 40 to 250 parts by mass of an organopolysiloxane other than the component (A), represented by the following general formula (2) and having a kinematic viscosity at 25°C of 1,000 to 100,000 mm²/s,
R³_{c}SiO_{(4-c)/2} (2)
wherein R³ represents one or two or more groups selected from the group of saturated or unsaturated monovalent hydrocarbon groups having 1 to 18 carbon atoms, and "c" represents a positive number of 1.8≤c≤2.2;
(C) 1 to 50 parts by mass, based on 100 parts by mass of the total of the components (A) and (B), of an organosilane represented by the following general formula (3),
R⁴_{d}R⁵ₑSi(OR⁶)_{4-d-e} (3)
wherein R⁴ independently represents an alkyl group having 9 to 15 carbon atoms, R⁵ independently represents an unsubstituted or substituted monovalent hydrocarbon group having 1 to 8 carbon atoms, R⁶ independently represents an alkyl group having 1 to 6 carbon atoms, "d" represents an integer of 1 to 3, and "e" represents an integer of 0 to 2, provided that d+e is an integer of 1 to 3; and
(D) 500 to 3,000 parts by mass, based on 100 parts by mass of the total of the components (A), (B), and (C), of a thermally conductive filler having a thermal conductivity of 10 W/m·°C or more.

2. The thermally conductive silicone composition according to claim 1, wherein an absolute viscosity at 25°C is 100 to 800 Pa·s.

3. The thermally conductive silicone composition according to claim 1 or 2, which has the thermal conductivity of 4.0 W/m·°C or more.
